(19) Europäisches Patentamt
European Patent Office
Office européen des brevets

(11) EP 3 053 941 A1

(12) EUROPEAN PATENT APPLICATION
published in accordance with Art. 153(4) EPC

(43) Date of publication:
**10.08.2016 Bulletin 2016/32**

(21) Application number: **14849930.4**

(22) Date of filing: **19.09.2014**

(51) Int Cl.:
***C08G 59/20*** *(2006.01)* ***C08J 5/24*** *(2006.01)*

(86) International application number:
**PCT/JP2014/074783**

(87) International publication number:
**WO 2015/046030 (02.04.2015 Gazette 2015/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2013 JP 2013203130**

(71) Applicant: **Toray Industries, Inc.**
**Tokyo 103-8666 (JP)**

(72) Inventors:
- **OKA, Hideki**
  **Nagoya-shi**
  **Aichi 455-8502 (JP)**
- **TOMIOKA, Nobuyuki**
  **Nagoya-shi**
  **Aichi 455-8502 (JP)**
- **HONDA, Shiro**
  **Nagoya-shi**
  **Aichi 455-8502 (JP)**

(74) Representative: **Prüfer & Partner mbB**
**Patentanwälte · Rechtsanwälte**
**Sohnckestraße 12**
**81479 München (DE)**

# (54) TWO-PACK EPOXY RESIN COMPOSITION FOR FIBER-REINFORCED COMPOSITE MATERIAL, AND FIBER-REINFORCED COMPOSITE MATERIAL

(57) By employing a two-pack epoxy resin composition for a fiber-reinforced composite material, which composition includes the following components [A] to [D], and in which the mass compounding ratio of component [A] and component [B] is 5:95-50:50, there is provided a fiber-reinforced composite material which has exceptional workability during resin preparation, exceptional stability of viscosity of the resin composition at low temperatures, and exceptional impregnation properties such that low viscosity is maintained during injection into reinforcing fibers, and which cures with a short time during molding, and has high dimensional stability and exceptional heat resistance. [A] an epoxy resin having an epoxy equivalent of 250 or less, and a hydroxyl equivalent of 500 or less; [B] an epoxy resin different from [A]; [C] an acid anhydride; [D] an organic phosphorus compound or imidazole derivative

EP 3 053 941 A1

## Description

TECHNICAL FIELD

The present invention relates to a two-pack epoxy resin composition used for fiber-reinforced composite materials, and a fiber-reinforced composite material produced therefrom.

BACKGROUND ART

The application of fiber-reinforced composite materials comprising reinforcing fibers and matrix resins is spreading in various fields, including sports and general industry, particularly aeronautics and space, as they enable material designs that best exploit the advantages of reinforcing fibers and matrix resins.

As reinforcing fibers, glass fiber, aramid fiber, carbon fiber, boron fiber and the like are used. As a matrix resin, both a thermosetting resin and a thermoplastic resin can be used, though a thermosetting resin is more frequently used because of its ability to easily impregnate reinforcing fibers. Examples of a thermosetting resin include an epoxy resin, an unsaturated polyester resin, a vinyl ester resin, a phenol resin, a bismaleimide resin, and a cyanate resin.

Fiber-reinforced composite materials are manufactured by applying the prepreg method, hand lay-up method, filament winding method, pultrusion method, resin transfer molding (RTM) method and other methods.

In recent years, Japanese as well as overseas automakers are striving to reduce the weight of vehicle bodies as a key parameter of fuel efficiency amid tightening environmental controls on motor vehicles around the world, with the application of carbon-fiber composite materials, which only weigh about half and 70% as much as steel and aluminum, respectively, actively investigated. As well as weight reduction, various automobile structural parts are, in many cases, subject to high rigidity and high strength requirements, while often having complex three-dimensional shapes. This has made RTM a promising molding method because of its ability to accommodate complex shapes, combined with the use of high-rigidity high-strength continuous carbon fiber. With the RTM method, a fiber-reinforced composite material is obtained by placing a reinforcing-fiber base in a mold and, after the mold is closed, injecting a resin from a resin injection port or ports to impregnate the reinforcing fibers. After the resin is cured, the mold is opened to take out the molded product. In this regard, productivity poses a major problem to the widespread use of carbon-fiber composite materials in motor vehicles, and, because of this barrier, their adoption has not gone beyond some luxury cars.

With the hand lay-up method, filament winding method, pultrusion method, RTM method and the like, a two-pack epoxy resin composition is often used from the viewpoint of moldability. A two-pack epoxy resin composition refers to an epoxy resin composition comprising a base resin pack containing an epoxy resin as the primary component and a curing agent pack containing a curing agent as the primary component that is obtained by mixing the two packs, i.e., the base resin pack and curing agent pack, immediately before use. In contrast, an epoxy resin composition in which all components, including the base resin and curing agent, are premixed together is called a one-pack epoxy resin composition. In the case of a one-pack epoxy resin composition, the curing reaction progresses even during storage, and this necessitates cold storage. In addition, with a one-pack epoxy resin composition, a low-reactivity solid agent is often selected as the curing agent component, and this makes it necessary to inject a one-pack epoxy resin composition into reinforcing fibers at high pressure using a press roll or the like to impregnate them with the one-pack epoxy resin composition. With a two-pack epoxy resin composition, a liquid agent can be chosen for both the base resin pack and curing agent pack, and this makes it possible to obtain a low-viscosity liquid epoxy resin composition with excellent reinforcing fiber impregnability as a mixture of a liquid base resin pack and liquid curing agent pack. Furthermore, since the base resin pack and curing agent pack are stored separately, there are no specific limitations on storage conditions, and long-term storage is possible.

To realize high-level productivity as described above using the RTM method, for instance, it is not enough to just have a short resin curing time. Rather, there is also a specific need to simultaneously satisfy the five requirements listed below. First, the two packs both have low and similar viscosity levels and thus exhibit excellent mixability during mixing of resin materials. Second, the mixed, prepared resin composition does not so much increase in viscosity and is stable for a long period of time while stored at low temperatures, that is, has excellent viscosity stability. Third, the resin composition exhibits low viscosity during the impregnation into the reinforcing-fiber base and a rise in viscosity is suppressed throughout this step to ensure excellent impregnability into the reinforcing-fiber base. Fourth, sufficiently fast curing is possible in the low temperature region around 100°C and this allows a simplification of molding equipment and eliminates the need for high heat resistance in secondary materials etc., thus giving rise to cost reductions, as well as excellent surface smoothness of molded products, achieved through a reduction in heat shrinkage attributable to the difference between the curing temperature and room temperature. Fifth, at the time of the demolding step after molding, the resin has reached an adequate level of rigidity as a result of curing. This makes smooth demolding possible with little strain, while eliminating strain or deformation in the following coating step, thus ensuring high dimensional accuracy in molded products.

To address these problems, Patent Document 1 discloses an epoxy resin composition suitable for molding fiber-reinforced composite materials that contains a polyol having an aromatic ring and thus cures in a short period of time at low temperatures and makes highly rigid molded products. However, this epoxy resin composition does not have adequate viscosity stability in the low temperature region.

Further, Patent Document 2 discloses a technique for providing an epoxy resin composition which is based on combined use of an acid anhydride curing agent and an organic phosphorus compound catalyst and thus has an excellent balance between the length of the low viscosity period and that of curing time under constant temperature conditions around 100°C. However, this technique has a problem in that it is inadequate in fast curing performance and lacks adequate resin rigidity during demolding, sometimes resulting in reduced dimensional accuracy.

Furthermore, Patent Document 3 discloses a technique for providing an epoxy resin composition suitable for semiconductor encapsulants. In the epoxy resin composition, an epoxy resin obtained by hydrogenating an aromatic epoxy resin is used as a base resin and an acid anhydride is used as a curing agent, and these are used in combination with a C16-C60 aliphatic polyol. This improves the toughness of cured resin and reduces the occurrence of cracks in the cured resin which would result from a cooling-heating cycle and provides excellent weatherproofness. However, this technique does not provide sufficient fast curing performance and thus is not suitable for use in fiber-reinforced composite materials.

As can be seen from the above, a two-pack epoxy resin composition that accommodates high-cycle molding (a large number of molding cycles in a given amount of time, made possible by reducing the length of time required to execute a single molding cycle), particularly an RTM method, and simultaneously meets all the requirements set to realize high productivity does not yet exist.

PRIOR ART DOCUMENTS

PATENT DOCUMENTS

Patent Document 1: Japanese Patent Laid-open Publication No. 2010-163573
Patent Document 2: International Publication WO 2007/125759
Patent Document 3: Japanese Patent Laid-open Publication No. 2002-69155

SUMMARY OF THE INVENTION

PROBLEMS TO BE SOLVED BY THE INVENTION

The present invention aims to provide a two-pack epoxy resin composition that offers excellent workability during resin preparation, has a highly stable viscosity at low temperatures after resin preparation, maintains low viscosity during the impregnation into reinforcing fibers, thus exhibiting excellent impregnability, quickly cures during molding and provides fiber-reinforced composite materials with high dimensional accuracy and high heat resistance, and a fiber-reinforced composite material produced therefrom by overcoming the shortcomings of prior art.

SOLUTIONS TO THE PROBLEMS

To solve the above problems, a two-pack epoxy resin composition for fiber-reinforced composite materials of the present invention has the following constitution. More specifically, the two-pack epoxy resin composition for fiber-reinforced composite materials comprises components [A] to [D] as specified below, the ratio by mass of component [A] to component [B] being 5 : 95 to 50 : 50:

[A] an epoxy resin having an epoxy equivalent of 250 or less and a hydroxyl equivalent of 500 or less;
[B] an epoxy resin other than component [A];
[C] an acid anhydride; and
[D] an organic phosphorous compound or an imidazole derivative.

To solve the above problems, a fiber-reinforced composite material of the present invention has the following constitution. More specifically, the fiber-reinforced composite material is obtained by combining the two-pack epoxy resin composition for fiber-reinforced composite materials with reinforcing fibers and allowing the two-pack epoxy resin composition to cure.

## EFFECTS OF THE INVENTION

The two-pack epoxy resin composition of the present invention not only offers excellent workability during resin preparation but also has a highly stable viscosity at low temperatures. Therefore, the two-pack epoxy resin composition maintains low viscosity during the impregnation into reinforcing fibers, thus exhibiting excellent impregnability, and quickly cures during molding.

Furthermore, according to the two-pack epoxy resin composition of the present invention, it is possible to provide a fiber-reinforced composite material with high dimensional accuracy and high heat resistance with high productivity.

## EMBODIMENTS OF THE INVENTION

Preferred embodiments of the present invention are described below.

A two-pack epoxy resin composition according to the present invention comprises components [A] to [D] as specified below:

[A] an epoxy resin having an epoxy equivalent of 250 or less and a hydroxyl equivalent of 500 or less;
[B] an epoxy resin other than component [A];
[C] an acid anhydride; and
[D] an organic phosphorous compound or an imidazole derivative.

Both component [A] and component [B] are epoxy resins. An epoxy resin is a compound that contains one or more epoxy groups per molecule.

Of such epoxy resins, the epoxy resin of component [A] has to have an epoxy equivalent of 250 or less and a hydroxyl equivalent of 500 or less. Since the epoxy resin of component [A] has an epoxy equivalent of 250 or less, an epoxy resin composition containing this epoxy resin has a low viscosity and thus is impregnated well into reinforcing fibers and, at the same time, the resulting fiber-reinforced composite material will have excellent heat resistance. It should be noted that, if component [A] is an epoxy resin that has too small an epoxy equivalent, low-molecular-weight impurities are sometimes present in the epoxy resin, leading to a deterioration in surface quality of the resulting fiber-reinforced composite material due to evaporation of the impurities during molding. Therefore, the epoxy resin of component [A] preferably has an epoxy equivalent of 110 or more.

The hydroxyl equivalent indicates the molecular weight of the epoxy resin per hydroxyl group in the epoxy resin. That is, the smaller the hydroxyl equivalent is, the larger the amount of hydroxyl groups per molecule is. The epoxy resin of component [A] has a hydroxyl equivalent of 500 or less. Therefore, as described later, the amount of hydroxyl groups in the molecular structure of the epoxy resin is large and this provides the effect of improving curing speed. It should be noted that, if component [A] is an epoxy resin that has too small a hydroxyl equivalent, as described later, the amount of hydroxyl groups in the molecular structure of the epoxy resin is too large and the viscosity stability, which is described later, may decrease. Therefore, the epoxy resin of component [A] preferably has a hydroxyl equivalent of 150 or more. It should be noted that the hydroxyl groups contained in component [A] are preferably alcoholic hydroxyl groups and, in view of the better heat resistance of the resulting cured product, the epoxy resin of component [A] preferably has two or more epoxy groups and more preferably has two or more and five or less epoxy groups.

Specific examples of component [A] include: aromatic glycidyl ethers obtained by allowing a phenol having a plurality of hydroxyl groups to react with an alkyl halide having an epoxy group such as epichlorohydrin; and aliphatic glycidyl ethers obtained by allowing a polyol having a plurality of hydroxyl groups to react with an alkyl halide having an epoxy group such as epichlorohydrin, which have an epoxy equivalent and a hydroxyl equivalent falling within the above-described ranges. Component [A] reduces the viscosity of the composition and thereby improves impregnation of the composition into reinforcing-fiber bases. In view of this, component [A] is preferably an aliphatic glycidyl ether derived from a polyol, that is, an aliphatic glycidyl ether obtained by allowing a polyol having a plurality of hydroxyl groups to react with an alkyl halide having an epoxy group such as epichlorohydrin. Examples of such an aliphatic glycidyl ether include: glycerol glycidyl ether; trimethylolethane glycidyl ether; trimethylolpropane glycidyl ether; sorbitol glycidyl ether; and diglycerol glycidyl ether.

Of these, glycerol diglycidyl ether, i.e., glycerol-type epoxy resin, trimethylolpropane glycidyl ether, i.e., trimethylolpropane-type epoxy resin, sorbitol glycidyl ether, i.e., sorbitol-type epoxy resin, and diglycerol glycidyl ether, i.e., diglycerol-type epoxy resin, are particularly preferable for use as component [A] as they excel in terms of the balance between the viscosity of the resin composition and the mechanical and physical properties of the resulting cured resin product, such as heat resistance and elastic modulus.

Component [A] has hydroxyl groups in its molecular structure which react with epoxy groups and acid anhydride groups, and thereby a ring-opening reaction proceeds. This contributes to an improvement in curing speed. However, in the case where an alcohol having no epoxy groups is added instead of component [A], the hydroxyl groups help the

ring-opening of the epoxy groups and acid anhydride groups to thereby improve curing speed, but the viscosity stability, which is describe later, dramatically decreases and workability becomes poor during molding. Although specific mechanisms are unknown, it seems that, when the molecular structure of an epoxy resin has hydroxyl groups like component [A], the movement of the hydroxyl groups is restricted as compared to the case of an alcohol with no epoxy groups, and thus the viscosity stability is increased.

Examples of commercially available glycerol-type epoxy resins include "Denacol" (registered trademark) EX-313, EX-314 (both manufactured by Nagase ChemteX Corporation) and "Araldite" (registered trademark) DY-S (manufactured by Huntsman).

Examples of commercially available trimethylolpropane-type epoxy resins include: "Denacol" (registered trademark) EX-321 (manufactured by Nagase ChemteX Corporation).

Examples of commercially available sorbitol-type epoxy resins include: "Denacol" (registered trademark) EX-611, EX-614B (both manufactured by Nagase ChemteX Corporation).

Examples of commercially available diglycerol-type epoxy resins include: "Denacol" (registered trademark) EX-421 (manufactured by Nagase ChemteX Corporation).

Specific examples of aromatic glycidyl ethers which fall under component [A] include alkyldiphenol-type epoxy resins having a hydroxyl group. Examples of commercially available alkyldiphenol-type epoxy resins include "EPICLON" (registered trademark) HP-820 (manufactured by DIC Corporation).

The hydroxyl equivalent of the epoxy resin is the inverse of a value found by dividing, by the formula weight of potassium hydroxide (56.11), the hydroxyl value (when 1 g sample is acetylated, the amount in milligrams of potassium hydroxide necessary to neutralize acetic acid bound with hydroxyl groups, unit: mgKOH/g) measured by the pyridine-acetyl chloride method according to JIS K 0070 (1992). This is equivalent to the molecular weight per hydroxyl group (unit: g/eq). The "pyridine-acetyl chloride method" for measuring the hydroxyl equivalent of the epoxy resin is, specifically, to dissolve a measuring resin in pyridine, add an acetyl chloride-toluene solution and heat the mixture, cool the mixture, and further boil the mixture to allow excessive acetyl chloride to be hydrolyzed, and thereafter titrate the resulted acetic acid with a potassium hydroxide-ethanol solution and measure the hydroxyl equivalent.

Component [B] is an epoxy resin other than component [A]. That is, component [B] is an epoxy resin that at least has an epoxy equivalent of more than 250 or an epoxy resin that at least has a hydroxyl equivalent of more than 500. It should be noted that the epoxy resin of component [B] preferably has an epoxy equivalent of 1000 or less.

Specific examples of component [B] include aromatic glycidyl ethers obtained from a phenol having a plurality of hydroxyl groups, aliphatic glycidyl ethers obtained from an alcohol having a plurality of hydroxyl groups, glycidyl amines obtained from an amine, epoxy resins having an oxirane ring, and glycidyl esters obtained from a carboxylic acid having a plurality of carboxyl groups, which have an epoxy equivalent or a hydroxyl equivalent falling within the above-described range.

Examples of aromatic glycidyl ethers available for use as component [B] include bisphenol-based diglycidyl ethers, such as bisphenol A diglycidyl ether, bisphenol F diglycidyl ether, bisphenol AD diglycidyl ether and bisphenol S diglycidyl ether, polyglycidyl ethers of a novolac obtained from a phenol, alkyl phenol or the like, resorcinol diglycidyl ether, hydroquinone diglycidyl ether, 4,4'-dihydroxybiphenyl diglycidyl ether,
4,4'-dihydroxy-3,3',5,5'-tetramethylbiphenyl diglycidyl ether, 1,6-dihydroxynaphthalene diglycidyl ether, 9,9'-bis(4-hydroxyphenyl)fluorene diglycidyl ether, tris(p-hydroxyphenyl)methane triglycidyl ether, tetrakis(p-hydroxyphenyl) ethane tetraglycidyl ether, and diglycidyl ethers with an oxazolidone backbone obtained by allowing bisphenol A diglycidyl ether and a bifunctional isocyanate to react with each other.

Examples of aliphatic glycidyl ethers available for use as component [B] include ethylene glycol diglycidyl ether, propylene glycol diglycidyl ether, 1,4-butanediol diglycidyl ether, 1,6-hexanediol diglycidyl ether, neopentyl glycol diglycidyl ether, cyclohexanedimethanol diglycidyl ether, glycerol triglycidyl ether, trimethylol ethane triglycidyl ether, trimethylolpropane triglycidyl ether, pentaerythritol tetraglycidyl ether, dodecahydrobisphenol A diglycidyl ether, and dodecahydrobisphenol F diglycidyl ether.

Examples of a glycidyl amine available for use as component [B] include diglycidyl aniline, diglycidyl toluidine, triglycidyl aminophenol, tetraglycidyl diaminodiphenyl methane, tetraglycidyl xylylene diamine, and a halogen or alkylic substitution product or hydrogenated product thereof.

Examples of an epoxy resin having an oxirane ring available for use as component [B] include vinyl cyclohexene dioxide, dipentene dioxide, 3,4-epoxycyclohexane carboxylic acid 3,4-epoxycyclohexylmethyl, adipic acid bis(3,4-epoxycyclohexylmethyl), dicyclopentadiene dioxide, bis(2,3-epoxycyclopentyl) ether, and an oligomer of 4-vinyl cyclohexene dioxide.

Examples of glycidyl esters available for use as component [B] include phthalic acid diglycidyl ester, terephthalic acid diglycidyl ester, hexahydrophthalic acid diglycidyl ester, and dimer acid diglycidyl ester.

Of these, a diglycidyl ether of a bisphenol compound, namely a bisphenol-type epoxy resin, especially a bisphenol A-type epoxy resin, is preferable for use as component [B] as it excels in terms of the balance between the viscosity of the resin composition and the mechanical and physical properties of the resulting cured resin product, such

as heat resistance and elastic modulus.

It is preferable that the number of repeating units of a bisphenol A-type epoxy resin suitable for use as component [B] be within the range of 0 to 0.2, more preferably 0 to 0.1. The number of repeating units corresponds to the n in the chemical structural formula of the bisphenol A-type epoxy resin as commonly expressed by the following formula. If the number of repeating units exceeds 0.2, the viscosity of the epoxy resin composition is high, leading to a deterioration in reinforcing fiber impregnability and, possibly, inadequacy in the heat resistance of the obtained fiber-reinforced composite material, as well.

[Chemical formula 1]

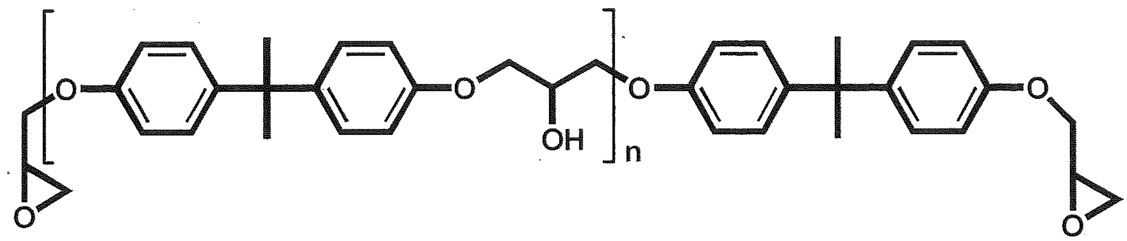

It is preferable that the epoxy equivalent of a bisphenol A-type epoxy resin suitable for use as component [B] be within the range of 170 to 220, more preferably 170 to 195. This epoxy equivalent usually becomes larger as the number of repeating units increases and smaller as the number of repeating units decreases. If the epoxy equivalent is too small, low-molecular-weight impurities are sometimes present, leading to a deterioration in surface quality due to evaporation during molding. If, on the other hand, the epoxy equivalent is too large, the viscosity of the epoxy resin composition is high, leading to a deterioration in impregnation into reinforcing fibers and, possibly, inadequacy in the rigidity of the obtained fiber-reinforced composite material, as well.

The ratio by mass of component [A] to component [B] has to be 5 : 95 to 50 : 50, preferably 10 : 90 to 35 : 65. If the amount of component [A] is too small, curing takes longer and productivity decreases. On the other hand, if the amount of [B] is too small, the heat resistance of the cured product decreases or the viscosity stability of the resin composition decreases.

In the case where the amount of hydroxyl groups is expressed in moles per kilogram of the epoxy resin composition, the amount of hydroxyl groups in the resin composition is preferably 0.1 mol/kg or more and 1.0 mol/kg or less, more preferably 0.1 mol/kg or more and 0.6 mol/kg or less. If the amount of hydroxyl groups per kilogram of the epoxy resin composition is too small, hydroxyl groups may not take effect, curing takes time and productivity may decrease and, if the amount of hydroxyl groups is too large, the viscosity stability of the resin composition may decrease. The amount of hydroxyl groups in the resin composition can be calculated from the following expression.

$$COH = (\Sigma(wn/wnOH))/W \times 1000 \quad \ldots \text{(Expression 1)}$$

where COH is the amount of hydroxyl groups in the epoxy resin composition (mol/kg),
wn is parts by mass of each component,
wnOH is the hydroxyl equivalent of each component (g/eq), and
W is the sum of parts by mass of all components.

It should be noted that the amount of hydroxyl groups in the resin composition may be calculated from Expression 1 using the hydroxyl equivalent for each component constituting the base resin pack and curing agent pack, or may be calculated from Expression (1) by measuring the hydroxyl equivalent of the base resin pack as a whole and that of the curing agent pack as a whole by the above-described "pyridine-acetyl chloride method" as the "hydroxyl equivalent of the base resin pack" and "hydroxyl equivalent of the curing agent pack" and using these as components.

Component [C] is an acid anhydride, specifically a carboxylic acid anhydride, and more specifically a compound that has one or more carboxylic acid anhydride groups which are capable of reacting with epoxy groups in an epoxy resin per molecule, and that acts as a curing agent for an epoxy resin. The number of carboxylic acid anhydride groups is preferably four or less per molecule.

Component [C] may be an acid anhydride that, like a phthalic anhydride, has an aromatic ring but does not have an alicyclic structure or an acid anhydride that, like a succinic anhydride, has neither an aromatic ring nor an alicyclic structure. However, in view of the ease of handling associated with a low-viscosity liquid and the heat resistance

and mechanical and physical properties of cured products, it is effective to use an acid anhydride having an alicyclic structure, with one having a cycloalkane or cycloalkene ring preferred.

Specific examples of such an acid anhydride having an alicyclic structure include hexahydro phthalic anhydride, methyl hexahydro phthalic anhydride, methyldihydro nadic anhydride, 1,2,4,5-cyclopentane tetracarboxylic dianhydride, 1,2,3,6-tetrahydrophthalic anhydride, methyl-1,2,3,6-tetrahydrophthalic anhydride, nadic anhydride, methyl nadic anhydride, bicyclo[2,2,2]octo-7-ene-2,3,5,6-tetracarboxylic dianhydride, and 4-(2,5-dioxotetrahydrofuran-3-yl)-3-methyl-1,2,5,6-tetrahyd rophthalic anhydride. Of these, hexahydro phthalic anhydride, tetrahydrophthalic anhydride, nadic anhydride and a selected alkyl substitution product thereof are preferably used as component [C], as they excel in terms of the balance between the viscosity of the resin composition and the heat resistance and the elastic modulus and other mechanical and physical properties of the resulting cured resin product. In this regard, even when an acid anhydride having an alicyclic structure is used as component [C], the epoxy resin composition of the present invention may contain an acid anhydride without an alicyclic structure.

It is preferable that the blending quantity of total epoxy resin (component [A] and component [B]) and component [C] be one that satisfies the condition that the H/E ratio is in the range of 0.8 to 1.1, more preferably 0.85 to 1.05 and even more preferably 0.9 to 1.0, where H is the number of acid anhydride groups present in component [C] and E is the total number of epoxy groups present in the total epoxy resin. If the H/E ratio is too small, the polymerization of excess epoxy resins progresses, and this leads to a deterioration in the physical properties of cured products. If the H/E ratio is too large, excess amounts of the curing agent component may reduce the concentration of the reaction system at the reaction point, leading to a reduction in the reaction speed and thus a failure to exhibit adequately fast curing performance.

It is necessary that the epoxy resin composition of the present invention contain an organic phosphorus compound or imidazole derivative as component [D], which acts as a curing accelerator for fast curing. Though the detailed mechanism is not known, it seems that an organic phosphorus compound or imidazole derivative is able to increase the length of the low-viscosity period by restraining the progress of the curing reaction of the epoxy resin composition at the initial stage and shorten the curing time by providing sufficiently high curing reaction speed in the intermediate and late stages. It is preferable that the blending quantity of component [D] be 5 to 25 parts by mass, more preferably 10 to 22 parts by mass, for 100 parts by mass of the total epoxy resin, including component [A] and component [B]. If component [D] is too small in amount, the time needed for curing lengthens, often resulting in a failure to exhibit adequately fast curing performance. If, on the other hand, component [D] is too large in amount, the low-viscosity period shortens, often resulting in difficulty in impregnation into reinforcing fibers. Using both components [C] and [D] as a curing agent and a curing accelerator, respectively, allows component [A] to realize both high speed curing and viscosity stability.

Specific examples of an organic phosphorus compound include tributyl phosphine, trioctyl phosphine, tricyclohexyl phosphine, triphenyl phosphine, tribenzyl phosphine, tri-o-tolyl phosphine, tri-m-tolyl phosphine, tri-p-tolyl phosphine, tris(4-methoxyphenyl) phosphine, tris(2,6-dimethoxyphenyl) phosphine, diphenyl cyclohexyl phosphine, p-styryldiphenyl phosphine, 1,2-bis(diphenyl phosphino)ethane, 1,3-bis(diphenyl phosphino)propane, 1,4-bis(diphenyl phosphino)butane, tetraphenylphosphonium tetraphenyl borate, and triphenylphosphine triphenylborane.

Specific examples of an imidazole derivative include imidazole, 2-methyl imidazole, 2-ethyl imidazole, 2-undecyl imidazole, 2-heptadecyl imidazole, 1,2-dimethyl imidazole, 2-ethyl-4-methyl imidazole, 2-phenyl imidazole, 2-phenyl-4-methyl imidazole, 1-benzyl-2-phenyl imidazole, 1-benzyl-2-methyl imidazole, 1-cyanoethyl-2-methyl imidazole, 1-cyanoethyl-2-undecil imidazole, 1-cyanoethyl-2-ethyl-4-methyl imidazole, and 1-cyanoethyl-2-phenyl imidazole.

It is preferable that the epoxy resin composition of the present invention be made from a blend of appropriate amounts of the foregoing components to have a viscosity at 25°C of 0.1 to 2.5 Pa·s, more preferably 0.1 to 2.0 Pa·s. Setting the viscosity at 25°C to 2.5 Pa·s or less makes it possible to lower the viscosity at the molding temperature and shorten the time required to impregnate the reinforcing-fiber base, thus eliminating the cause for impregnation failure. Setting the viscosity at 25°C to 0.1 Pa·s or more, on the other hand, makes it possible to avoid pitting, attributable to the trapping of air during the impregnation into the reinforcing-fiber base, and prevent the generation of unimpregnated regions, attributable to uneven impregnation, by keeping the viscosity at the molding temperature sufficiently high. It should be noted that the viscosity at 25°C is measured immediately after the epoxy resin composition is prepared.

The epoxy resin composition of the present invention has importance in usable life after all the components are mixed together, and thus is required to have viscosity stability. Specifically, the epoxy resin composition preferably has a specific temperature T at which $N \times t\,90 \leq 12$ holds, where N is the ratio of the viscosity at 40°C of the resin composition after 20 minutes of keeping at 40°C from when all the components are mixed to the viscosity of the resin composition at 40°C immediately after the mixing of all the components, and t90 (unit: minute) is the length of time that the cure index, as obtained in a dielectric measurement performed while maintaining a constant temperature T of the resin composition, takes to reach 90%. If the epoxy resin composition does not have a specific temperature T at which $N \times t90 \leq 12$ holds, that is, if $N \times t90 > 12$ when measured while maintaining any temperature, the impregnation into a curing-fiber base may be insufficient or curing takes time and productivity may decrease.

In the present invention, the viscosity is determined by measurement via, for instance, the measuring method

that uses a cone-and-plate rotational viscometer as specified in ISO 2884-1 (1999). Examples of actual measuring equipment include the model TVE-33H, manufactured by Toki Sangyo Co., Ltd.

It is preferable that the epoxy resin composition of the present invention have a specific temperature T' at which t10 and t90 satisfy all the following three relational expressions (Expression 2) to (Expression 4):

$$0.5 \leq t10 \leq 4 \text{ … (Expression 2)}$$

$$0.5 \leq t90 \leq 9 \text{ … (Expression 3)}$$

$$1 < t90/t10 \leq 2.5 \text{ … (Expression 4)}$$

(where t10 and t90 are lengths of time (in minutes) that the cure index, as obtained in a dielectric measurement performed while maintaining a constant temperature, takes to reach 10% and 90%, respectively, from the start of the measurement).

Dielectric measurement is beneficial in obtaining the curing profile of a thermosetting resin as it transforms from a low-viscosity liquid to an amorphous solid with a high elastic modulus, though it is unable to directly measure viscosity or elastic modulus. With dielectric measurement, the curing profile of a thermosetting resin is obtained as the change in ion viscosity (equivalent resistivity) with time as calculated from the complex dielectric constant measured by applying a high-frequency electric field.

As dielectric measurement equipment, the curing monitor model MDE-10, manufactured by Holometrix-Micromet, for instance, is available. The procedure begins with the installation of a Viton O-ring with an inside diameter of 32 mm and a thickness of 3 mm on the underside of an MP2000 programmable mini press featuring an embedded-into-the-bottom TMS-1 inch-type sensor and the setting of the temperature of the press to a predetermined value, T'. An epoxy resin composition is then poured into the hollow inside the O-ring. After the press is closed, the change in the ion viscosity of the resin composition with time is tracked. A dielectric measurement is performed at frequencies of 1, 10, 100, 1000 and 10000 Hz, and the frequency-independent logarithm Log ($\sigma$) of ion viscosity is obtained using the software bundled with the equipment (Yu metric).

The cure index at the required curing time, t, is obtained using Expression 5, with the times at which the cure index reaches 10% and 90% denoted as t10 and t90, respectively.

$$\text{Cure index} = \{\log(\alpha t) - \log(\alpha min)\}/\{\log(\alpha max) - \log(\alpha min)\} \times 100 \text{ … (Expression 5)}$$

Cure index: (unit: %)
$\alpha$t: Ion viscosity at time t (unit: $\Omega \cdot$cm)
$\alpha$min: Minimum value of ion viscosity (unit: $\Omega \cdot$cm)
$\alpha$max: Maximum value of ion viscosity (unit: $\Omega \cdot$cm).

The tracking of ion viscosity in a dielectric measurement is relatively easy even if the curing reaction is fast. Moreover, ion viscosity can be measured even after gelation, and, in addition to the initial change in viscosity, this same process can be used to track the progress of the curing reaction since ion viscosity has such a property as to increase with the progress in curing and become saturated upon completion of curing. As shown above, the cure index is derived from the logarithm of ion viscosity by standardizing its values in such a manner that the minimum value and the saturated value (maximum value) become 0% and 100%, respectively. It is used to describe the curing profile of a thermosetting resin. Using the time required for the cure index to reach 10% as the indicator of the speed of the initial rise in viscosity and the time required for the cure index to reach 90% as the indicator of the curing time makes it possible to describe the preferable conditions for a slow initial rise in viscosity and fast curing.

The meanings of the three relational expressions shown above are now summarized. First, t10, which is proportional to the time required for an epoxy resin composition to become fluid at the specific temperature T' (fluidizability time), is 0.5 to 4 minutes (Expression 2). Second, t90, which is proportional to the time required for the curing of an epoxy resin composition to complete to allow demolding (demoldability time), is 0.5 to 9 minutes (Expression 3). Third, the ratio between the fluidizability time and demoldability time of an epoxy resin composition is more than 1 and 2.5 or less (Expression 4). In other words, since these expressions mean that, within the above ranges, the larger t10 is, the

better the reinforcing-fiber impregnability of an epoxy resin composition is, and the smaller t90 is, the faster the curing of an epoxy resin composition is, it is more preferable that t90/t10 be as small as possible within the range of 1 (exclusive) to 2.5 (inclusive).

It should be noted that, taking into consideration the balance with the molding temperature to be described later, it is preferable that the molding temperature (thermal curing temperature) of an epoxy resin composition, namely the specific temperature T or T', be within the range of 90 to 130°C. Setting the specific temperature T or T' within the range of 90 to 130°C makes it possible to obtain a fiber-reinforced composite material with good surface quality by simultaneously shortening the time required for curing and alleviating the post-demolding heat shrinkage.

The two-pack epoxy resin composition of the present invention is obtained by first preparing a base resin pack containing components [A] and [B] as the primary component and a curing agent pack containing component [C] as the primary component at the blending quantities specified above and, immediately before use, mixing them while adhering to the specified blending quantities. Though the foregoing component [D] may be blended into either the base resin pack or curing agent pack, it is usually included in the curing agent pack. Other blending components may be blended into whichever pack, so that they may, in advance, be blended into either the base resin pack or curing agent pack, or even both. It should be noted here that the "primary component" means that the amount of the component is usually more than 50 mass%, preferably 70 mass%, more preferably 90 mass% with respect to the total mass, and the amount may be 100 mass%.

It is advisable that the base resin pack and curing agent pack be separately heated before mixing and it is also preferable that they be mixed to obtain an epoxy resin composition immediately before use, e.g. injection into a mold, using a mixer from the viewpoint of the handleable period of the resin.

A fiber-reinforced composite material of the present invention is obtained from the two-pack epoxy resin composition by combining it with reinforcing fibers and curing it. Though there are no specific limitations on the molding method for a fiber-reinforced composite material of the present invention, the hand lay-up method, filament winding method, pultrusion method, RTM method and other molding methods based on a two-pack resin are advantageously used. Of them, the RTM method is particularly advantageous from the viewpoint of, for instance, productivity and the degree of freedom in the shape of the molded product. The RTM method is designed to obtain a fiber-reinforced composite material by impregnating a reinforcing-fiber base placed in a mold with a resin and curing the resin.

Using such an RTM method as an example, a method for producing a fiber-reinforced composite material of the present invention is described. First, the epoxy resin composition of the present invention is obtained in the manner described above. A fiber-reinforced composite material of the present invention may be produced by preheating the epoxy resin composition, injecting it into a mold that has been preheated to the specific temperature T or T' and holding a reinforcing-fiber base to impregnate the fibers, and curing the resin inside the mold.

It is preferable that the temperature at which to heat the epoxy resin composition, to be determined from the relationship between the initial viscosity of the epoxy resin composition and the rise in viscosity, be 30 to 70°C, more preferably 50 to 60°C, from the viewpoint of the impregnability of the reinforcing-fiber base.

In addition, it is preferable that, with such a fiber-reinforced composite material production method, appropriate conditions, e.g. the use of a mold with two or more injection ports and injection of an epoxy resin composition from those injection ports simultaneously or consecutively, be chosen according to the fiber-reinforced composite material to be produced from the viewpoint of obtaining a high degree of freedom in the shape or size of the molded product. There are no restrictions on the number or shape of injection ports, and, to make quick inj ection possible, the more inj ection ports there are the better, and it is preferable that they be geometrically arranged in such a manner as to keep the resin flow distances as short as possible according to the shape of the molded product.

The injection pressure of the epoxy resin composition is usually 0.1 to 1.0 MPa. It is preferable that the injection pressure be 0.1 to 0.6 MPa from the viewpoint of injection time and economic efficiency of equipment. The vacuum-assisted resin transfer molding (VaRTM) method, in which the mold is vacuum-aspirated and thereby the resin composition is injected, may be employed. It is also preferable that, even in the case of using compression injection, the mold be vacuum-aspirated before the injection of the resin composition to suppress the generation of voids.

With a fiber-reinforced composite material of the present invention, glass fiber, aramid fiber, carbon fiber, boron fiber and the like are advantageously used as reinforcing fibers. Of them, carbon fiber is particularly advantageous for the reason that it makes it possible to obtain fiber-reinforced composite materials that excel in strength, elastic modulus and other mechanical and physical properties, despite being lightweight.

Reinforcing fibers may be either short fibers or continuous fibers or even a combination of both. To obtain a fiber-reinforced composite material with a high Vf, continuous fibers are preferable.

With a fiber-reinforced composite material of the present invention, reinforcing fibers are sometimes used in strand form, but reinforcing-fiber bases made of reinforcing fibers worked into a mat, woven fabric, knit fabric, braid, unidirectional sheet or a similar form are advantageously used. Of these, woven fabrics are particularly advantageous as they are suited to produce high-Vf fiber-reinforced composite materials and are excellent in handleability.

The ratio of the net reinforcing fiber volume of a woven fabric to its apparent volume is defined as the fiber

packing ratio of a woven fabric. The fiber packing ratio of a woven fabric is obtained from the weight per unit surface area of the woven fabric W (unit: $g/m^2$), thickness t (unit: mm) and density of the reinforcing fiber pf (unit: $g/cm^3$) based on the expression W/ (1000t·ρf). The surface-area weight density (weight per unit surface area) and thickness of the woven fabric are obtained in accordance with JIS R 7602 (1995). Since the higher the fiber packing ratio of a woven fabric, the easier it is to get a high-Vf fiber-reinforced composite material, it is necessary that the fiber packing ratio of a woven fabric be within the range of 0.10 to 0.85, preferably 0.40 to 0.85 and more preferably 0.50 to 0.85.

To ensure that a fiber-reinforced composite material of the present invention has a high specific strength or specific modulus, it is necessary that its volume fraction of fiber Vf be in the range of 40 to 85%, preferably 45 to 85%. The volume fraction of fiber Vf of a fiber-reinforced composite material as specified here is a value defined and measured as shown below in accordance with ASTM D3171(1999) and applies to the post-impregnation and post-curing state. In specific terms, the volume fraction of fiber Vf of a fiber-reinforced composite material can be calculated from thickness h of the fiber-reinforced composite material using the expression below.

$$Vf(\%) = (Af \times N)/(\rho f \times h)/10 \ldots \text{(Expression 6)}$$

Af: Mass of fiber base per square meter ($g/m^2$)
N: Number of laminated fiber bases
pf: Density of reinforcing fiber ($g/cm^3$)
h: Thickness of fiber-reinforced composite material (test piece) (mm)

It should be noted that, in order to specify the mass of a fiber base per square meter Af, number of laminated fiber bases N and density of reinforcing fiber pf from a fiber-reinforced composite material, it is only necessary to separate a reinforcing fiber base from the fiber-reinforced composite material by any of the combustion method, nitric acid decomposition method and sulfuric acid decomposition method as specified in JIS K 7075 (1991). In such cases, the value of the density of the reinforcing fiber used should be one measured in accordance with JIS R 7603 (1999).

It is preferable that, as described in JIS K 7072 (1991), the thickness h of fiber-reinforced composite material be measured using a micrometer as specified in JIS B 7502 (1994) or any other device with equivalent or greater accuracy. If the thickness of a fiber-reinforced composite material cannot be measured due to a complex shape, samples (samples with a degree of suitability for measurement in terms of shape and size) may be cut out of the fiber-reinforced composite material and subjected to a measurement.

One of the preferable forms of a fiber-reinforced composite material of the present invention is a veneer. Other preferable forms include a sandwich structure, in which veneer-like fiber-reinforced composite materials are placed against a core material on two opposing sides, and a hollow structure, in which veneer-like structures are joined in a closed chain to leave a hollow inside, and a canapes structure, in which a veneer-like fiber-reinforced composite material is placed against a core material on one side.

Examples of a core material in a sandwich structure or canape structure include an aluminum or aramid honeycomb core, a formed plastic core made of polyurethane, polystyrene, polyamide, polyimide, polyvinyl chloride, phenol resin, acrylic resin, epoxy resin or the like, or a balsa or other wooden core. Of these, a formed plastic core is particularly advantageously used as a core material for the reason that it makes it possible to obtain a lightweight fiber-reinforced composite material.

Fiber-reinforced composite materials of the present invention are advantageously used in structural members and outer panels of aircraft, satellites, industrial machines, rail vehicles, vessels, motor vehicles and the like as they have excellent mechanical characteristics, such as strength and elastic modulus, while being lightweight. They are particularly advantageously used in outer panels of motor vehicles because of their excellent color tone, surface quality and dimensional accuracy.

EXAMPLES

The present invention is described in further detail below using examples.

<Resin ingredients>

To obtain resin compositions for various examples, the resin ingredients listed below were used. Unless otherwise specified, the unit used to quantitatively express the constitutions of resin compositions in Table 1 is parts by mass.

1. Epoxy resin of component [A]

- "Denacol" (registered trademark) EX-313 (manufactured by Nagase ChemteX Corporation): glycerol-type epoxy resin, epoxy equivalent 141, hydroxyl equivalent 274
- "Denacol" (registered trademark) EX-314 (manufactured by Nagase ChemteX Corporation): glycerol-type epoxy resin, epoxy equivalent 144, hydroxyl equivalent 469
- "Denacol" (registered trademark) EX-321 (manufactured by Nagase ChemteX Corporation): trimethylolpropane-type epoxy resin, epoxy equivalent 140, hydroxyl equivalent 302
- "Denacol" (registered trademark) EX-421 (manufactured by Nagase ChemteX Corporation): diglycerol-type epoxy resin, epoxy equivalent 159, hydroxyl equivalent 435
- "Denacol" (registered trademark) EX-614 (manufactured by Nagase ChemteX Corporation): sorbitol-type epoxy resin, epoxy equivalent 167, hydroxyl equivalent 229
- "EPICLON" (registered trademark) HP-820 (manufactured by DIC Corporation): alkyldiphenol-type epoxy resin with hydroxyl groups, epoxy equivalent 220, hydroxyl equivalent 490

2. Epoxy resin of component [B]

- "jER" (registered trademark) 1001 (manufactured by Mitsubishi Chemical Corporation): bisphenol A-type epoxy resin, epoxy equivalent 475, hydroxyl equivalent 449
- "Epotohto" (registered trademark) YD-128 (manufactured by NIPPON STEEL & SUMIKIN CHEMICAL CO., LTD.): bisphenol A-type epoxy resin, epoxy equivalent 189
- "Epotohto" (registered trademark) YDF-170 (manufactured by NIPPON STEEL & SUMIKIN CHEMICAL CO., LTD.): bisphenol F-type epoxy resin, epoxy equivalent 170
- "CELLOXIDE" (registered trademark) 2021P (manufactured by Daicel Corporation): alicyclic epoxy resin, epoxy equivalent 137

3. Acid anhydride

- HN-5500 (manufactured by Hitachi Chemical Co., Ltd.) : Methyl hexahydro phthalic anhydride
- "KAYAHARD" (registered trademark) MCD (manufactured by Nippon Kayaku Co., Ltd.): Methyl nadic anhydride

4. Curing accelerator

- Triphenyl phosphine "TPP" (manufactured by K.I Chemical Industry Co., Ltd.)
- Tri-o-tolyl phosphine "TOTP" (manufactured by Hokko Chemical Industry Co., Ltd.)
- "CUREZOL"(registered trademark) 12DMZ (manufactured by Shikoku Chemicals Corp.): 1,2-Dimethyl imidazole

5. Hydroxyl group-containing substance other than epoxy resin

- Glycerol (manufactured by KANTO CHEMICAL CO., INC.)

<Preparation of epoxy resin composition>

Base resin packs were obtained by mixing epoxy resins at compounding ratios specified in Table 1. Curing agent packs were obtained by mixing an acid anhydride and a curing accelerator at compounding ratios specified in Table 1. By mixing such base resin packs and curing agent packs at compounding ratios as specified in Table 1, epoxy resin compositions were prepared.

<Measurement of viscosity of resin composition>

The viscosity of each epoxy resin composition was measured in accordance with a measuring method based on a cone-and-plate rotational viscometer in accordance with ISO 2884-1 (1994). The actual equipment chosen was a TVE-30H from Toki Sangyo Co., Ltd. with a 1°34' ×R24 rotor. The sample quantity was 1 $cm^3$. The initial viscosity at 25°C was measured immediately after the preparation of the epoxy resin composition. Furthermore, the viscosity A at 40°C immediately after the preparation of the epoxy resin composition and the viscosity B at 40°C after 20 minutes of keeping at 40°C from when the epoxy resin composition is prepared were measured, and the ratio of B to A was calculated as the viscosity increase ratio N at 40°C after 20 minutes of the composition. The viscosity increase ratio was used as an indicator of viscosity stability.

<Dielectric measurement>

To track the curing behavior of the resin, a dielectric measurement was conducted. As dielectric measurement equipment, an MDE-10 curing monitor from Holometrix-Micromet was used. The procedure began with the installation of a Viton O-ring with an inside diameter of 32 mm and a thickness of 3 mm on the underside of an MP2000 programmable mini press featuring an embedded-into-the-bottom TMS-1 inch-type sensor and the setting of the temperature of the press to 120°C. An epoxy resin composition was then poured into the hollow inside the O-ring. After the press was closed, the change in the ion viscosity of the resin composition with time was tracked. A dielectric measurement was performed at frequencies of 1, 10, 100, 1000 and 10000 Hz, and the frequency-independent logarithm Log ($\alpha$) of ion viscosity was obtained using the software bundled with the equipment.

Next, the cure index was obtained using Expression 5, with the time at which the cure index would reach 90%, t90 found.

$$\text{Cure index} = \{\log(\alpha t) - \log(\alpha min)\}/\{\log(\alpha max) - \log(\alpha min)\} \times 100 \quad \ldots \text{(Expression 5)}$$

Cure index: (unit: %)
$\alpha$t: Ion viscosity at time t (unit: $\Omega$·cm)
$\alpha$min: Minimum value of ion viscosity (unit: $\Omega$·cm)
$\alpha$max: Maximum value of ion viscosity (unit: $\Omega$·cm)

<Preparation of cured resin plate>

A 2 mm-thick copper spacer produced by making a hole in the middle of a 50 mm-square specimen was installed on the underside of the press equipment, and the press temperature was set to 120°C. An epoxy resin composition was then poured through the hole of the spacer, and the press was closed. Twenty minutes later, the press was opened, and a cured resin plate was obtained.

<Measurement of glass transition temperature Tg of cured resin product>

A test piece 12.7 mm wide and 40 mm long was cut out of the cured resin plate, and a torsional DMA measurement was conducted using a rheometer (ARES manufactured by TA Instruments). As a measurement condition, the heating speed was set to 5°C/min. The temperature at which the storage modulus curve obtained in the measurement had an inflection point G' was denoted as Tg.

<Preparation of fiber-reinforced composite material>

A fiber-reinforced composite material prepared via the RTM method described below was used for dynamic tests.

With a metal mold with a shallow rectangular cavity measuring 350 mm × 700 mm × 2 mm provided, nine pieces of the carbon-fiber woven fabric CO6343 (carbon fiber: T300-3K, structure: plain weave, surface-area weight density (weight per unit surface area) : 198 $g/m^2$, manufactured by Toray Industries, Inc.) were placed in the cavity as reinforcing fibers and mold-clamped using press equipment. After holding the metal mold at 100°C (molding temperature), its internal pressure was lowered to atmospheric pressure-0.1 MPa using a vacuum pump. Next, the base resin pack and curing agent pack of an epoxy resin composition, both preheated to 50°C, were mixed and injected at a pressure of 0.2 MPa using a resin injector. Twenty minutes after the injection of the epoxy resin composition began, the metal

mold was opened, and a fiber-reinforced composite material was obtained by demolding.

<Reinforcing fiber impregnability of resin>

Impregnability during resin injection in preparing the fiber-reinforced composite material as described above was comparatively evaluated in three grades as follows: "good" if the void content of the molded product is less than 1%, i.e. voids are virtually non-existent; "fair" if the void content of the molded product is 1% or more though the appearance of the molded product does not indicate the presence of unimpregnated regions; and "bad" if the appearance of the molded product indicates the presence of unimpregnated regions.

In this regard, the void content of a molded product is a quantity measured by observing a smoothly polished cross section of the molded product using an incident-light microscope and calculating the proportion of the combined area accounted for by voids.

<Demoldability of fiber-reinforced composite material>

Workability during demolding in preparing the fiber-reinforced composite material as described above was comparatively evaluated in three grades as follows: "good" if the molded product can be easily removed from the mold using a spatula without any resistance; "fair" if the molded product can be demolded without any plastic deformation to it despite meeting resistance (practically inferior to "good" as demolding work takes time) ; and "bad" if demolding is difficult or plastic deformation occurs to the molded product during demolding.

(Working examples 1 to 13)

An epoxy resin composition was prepared and then subjected to a viscosity measurement and dielectric measurement as described above. In addition, a cured resin plate and a fiber-reinforced composite material were prepared in the manner described above using the prepared epoxy resin composition.

As shown in Table 1, the epoxy resin composition of the present invention has a small viscosity increase ratio and keeps low viscosity even left to stand at a low temperature of 40°C. It is also shown that, since the demoldability time at 120°C, denoted as t90, is short, it is also effective in shortening the molding time of the fiber-reinforced composite material. Furthermore, since the Tg of the cured resin product exceeds the molding temperature (120°C), a molded product can be easily demolded without deformation.

(Comparative examples 1 to 5)

An epoxy resin composition was prepared and then subjected to a viscosity measurement and dielectric measurement as described above. In addition, a cured resin plate and a fiber-reinforced composite material were prepared in the manner described above using the prepared epoxy resin composition.

As shown in Table 1, epoxy resin compositions that fall outside the range set by the present invention do not have satisfactory characteristics. With comparative example 1, which does not contain component [A], curing time is long as compared to the working examples and is inferior in terms of productivity of molding. With comparative example 2, in which component [A] is larger in amount than the mass ratio of component [A] to component [B] of 50 : 50, the viscosity increases dramatically at a low temperature of 40°C and the viscosity stability of the resin composition is poor. That is, this means that the impregnation into reinforcing fibers is poor. With comparative example 3, which does not contain component [B], the heat resistance of the cured product is low in addition to the physical properties of comparative example 2. With comparative example 4, in which an epoxy resin that has a hydroxyl equivalent of not more than 500 but has an epoxy equivalent of more than 250 is added instead of component [A], the viscosity of the resin composition is high and also the viscosity increase ratio is high, and thus viscosity stability is poor, resulting in poor impregnation into reinforcing fibers. With comparative example 5, which contains glycerol as a hydroxyl group-containing compound instead of component [A], the viscosity also increases dramatically at a low temperature of 40°C and the viscosity stability of the resin composition is poor.

As can be seen from the above, epoxy resin compositions of the present invention are suited to the molding of a fiber-reinforced composite material, and thus provide fiber-reinforced composite materials with excellent appearance and surface quality quickly and efficiently via the RTM method, etc. Epoxy resin compositions of the present invention are also amenable to the molding of a large fiber-reinforced composite material, and are particularly advantageously applied.to motor vehicle structural members.

[Table 1]

| | | | | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|---|---|---|
| Epoxy resin composition | Epoxy resin | [A] Epoxy resin having epoxy equivalent of 250 or less and hydroxyl equivalent of 500 or less | "Denacol" EX-313 | | | | | | | | 15 | | | | | | | | | | |
| | | | "Denacol" EX-314 | | | | | | | | | 30 | | | | | | | | | |
| | | | "Denacol" EX-321 | 5 | 10 | 20 | 35 | 50 | | | | | | | | | | 55 | 100 | | |
| | | | "Denacol" EX-421 | | | | | | | | | | 25 | | | | | | | | |
| | | | "Denacol" EX-614 | | | | | | 20 | 45 | | | | | | | | | | | |
| | | | "EPICLON" HP-820 | | | | | | | | | | | 35 | 50 | 12 | | | | | |
| | | [B] Epoxy resin other than [A] | "jER" 1001 | | | | | | | | | | | | | | | | | 15 | |
| | | | "Epotohto" YD-128 | 95 | 90 | 80 | 65 | 50 | | 55 | | | | | 50 | | 100 | 45 | | 85 | 100 |
| | | | "Epotohto" YDF-170 | | | | | | 80 | | 85 | | 75 | | | | | | | | |
| | | | "CELLOXIDE" 2021P | | | | | | | | | 70 | | 65 | | 88 | | | | | |
| | [C] Acid anhydride | | HN-5500 | 90 | 92 | 95 | 99 | 104 | 99 | 94 | | | | | 83 | | 89 | 106 | 120 | 81 | 89 |
| | | | "KAYAHARD" MCD | | | | | | | | 108 | 127 | 106 | 113 | | 124 | | | | | |
| | [D] Organic phosphorous compound or imidazole derivative | | TPP | | | | | | 18 | | | 18 | | | 18 | | | | | 20 | 15 |
| | | | TOTP | 21 | 21 | 21 | 21 | 21 | | 21 | | | 21 | | | 21 | 21 | 21 | 21 | | |
| | | | "CUREZOL" 12DMZ | | | | | | | | 10 | | | 10 | | | | | | | |
| | Hydroxyl group-containing substance other than epoxy resin | | Glycerol | | | | | | | | | | | | | | | | | | 2 |
| | | | Amount of hydroxyl groups in epoxy resin composition [molOH/1 kg epoxy resin composition] | 0.078 | 0.155 | 0.307 | 0.527 | 0.736 | 0.402 | 0.914 | 0.251 | 0.261 | 0.253 | 0.315 | 0.500 | 0.098 | 0.000 | 0.802 | 1.374 | 0.166 | 0.000 |
| | | | H/E ratio | 1.00 | 1.00 | 1.00 | 0.99 | 1.00 | 1.00 | 1.00 | 1.00 | 0.99 | 1.00 | 1.00 | 1.00 | 1.00 | 1.00 | 1.00 | 1.00 | 1.00 | 1.00 |
| Uncured resin properties | | | Initial viscosity of composition at 25°C [Pa·s] | 0.5 | 0.5 | 0.4 | 0.3 | 0.3 | 0.4 | 0.3 | 0.5 | 0.2 | 0.7 | 1.0 | 1.8 | 0.8 | 0.6 | 0.3 | 0.3 | 1.0 | 0.6 |
| | | | Viscosity increase ratio of composition after 20 minutes at 40°C | 2.19 | 2.76 | 3.76 | 4.65 | 5.58 | 3.98 | 6.40 | 3.11 | 3.36 | 3.25 | 3.33 | 4.32 | 2.31 | 1.49 | 6.13 | 7.50 | 5.55 | 12.61 |
| | | | t90 at 120°C [minute] | 3.2 | 2.9 | 2.3 | 2.2 | 2.2 | 2.2 | 2.4 | 2.4 | 2.3 | 2.4 | 2.7 | 2.1 | 3.1 | 4.0 | 2.3 | 2.6 | 2.3 | 2.5 |
| Cured resin properties | | | Tg of cured product at 120°C [°C] | 130 | 128 | 123 | 118 | 114 | 134 | 136 | 121 | 129 | 127 | 132 | 122 | 131 | 134 | 112 | 111 | 130 | 123 |
| Fiber-reinforced composite material moldability | | | Impregnability into reinforcing fibers | good | good | good | fair | fair | good | fair | good | good | fair | fair | good | fair | good | fair | fair | bad | bad |
| | | | Demoldability | fair | good | good | good | fair | good | good | good | good | good | good | good | good | bad | bad | bad | good | good |

INDUSTRIAL APPLICABILITY

Since an epoxy resin composition of the present invention offers excellent workability during resin preparation, excellent viscosity stability at low temperatures, cures quickly during molding and provides high-quality fiber-reinforced composite materials, it is possible to provide high-quality fiber-reinforced composite materials with high productivity via the RTM method, etc. This helps accelerate the application of fiber-reinforced composite materials to, in particular, automotive uses, and gives rise to hopes for improvements in motor vehicle fuel efficiency through further weight reduction and a contribution to the reduction of greenhouse gas emissions.

## Claims

1. A two-pack epoxy resin composition for fiber-reinforced composite materials comprising components [A] to [D] as specified below, a ratio by mass of component [A] to component [B] being 5 : 95 to 50 : 50:

   [A] an epoxy resin having an epoxy equivalent of 250 or less and a hydroxyl equivalent of 500 or less;
   [B] an epoxy resin other than component [A];
   [C] an acid anhydride; and
   [D] an organic phosphorous compound or an imidazole derivative.

2. The two-pack epoxy resin composition for fiber-reinforced composite materials according to claim 1, wherein the epoxy resin of component [A] has two or more epoxy groups.

3. The two-pack epoxy resin composition for fiber-reinforced composite materials according to claim 1 or 2, wherein component [A] is an aliphatic glycidyl ether derived from a polyol.

4. The two-pack epoxy resin composition for fiber-reinforced composite materials according to claim 1 or 2, wherein component [A] is an epoxy resin selected from glycerol-type epoxy resins, trimethylolpropane-type epoxy resins, and sorbitol-type epoxy resins.

5. The two-pack epoxy resin composition for fiber-reinforced composite materials according to any of claims 1 to 4, wherein component [B] is a bisphenol-type epoxy resin.

6. The two-pack epoxy resin composition for fiber-reinforced composite materials according to any of claims 1 to 5, wherein component [C] is an acid anhydride having an alicyclic structure.

7. The two-pack epoxy resin composition for fiber-reinforced composite materials according to any of claims 1 to 6, wherein the amount of hydroxyl groups in the epoxy resin composition, which is expressed in moles per kilogram of the epoxy resin composition, is 0. 1 mol/kg or larger and 1.0 mol/kg or smaller.

8. The two-pack epoxy resin composition for fiber-reinforced composite materials according to any of claims 1 to 7, which has a specific temperature T at which $N \times t90 \leq 12$ holds, where N is a ratio of viscosity of the resin composition after 20 minutes of keeping at 40°C from when all the components are mixed to viscosity of the resin composition at 40°C immediately after the mixing of all the components, and t90 (unit: minute) is a length of time that a cure index, as obtained in a dielectric measurement performed while maintaining a constant temperature T of the resin composition, takes to reach 90%.

9. The two-pack epoxy resin composition for fiber-reinforced composite materials according to any of claims 1 to 8, which has a viscosity at 25°C of 0.1 to 2.5 Pa·s.

10. The two-pack epoxy resin composition for fiber-reinforced composite materials according to any of claims 1 to 9, which is obtained by mixing a base resin pack containing components [A] and [B] with a curing agent pack containing components [C] and [D].

11. A fiber-reinforced composite material which is produced by combining the two-pack epoxy resin composition for fiber-reinforced composite materials recited in any of claims 1 to 10 with reinforcing fibers and allowing the two-pack epoxy resin composition to cure.

12. The fiber-reinforced composite material according to claim 11, wherein the reinforcing fibers are carbon fibers.

## INTERNATIONAL SEARCH REPORT

International application No.
PCT/JP2014/074783

A. CLASSIFICATION OF SUBJECT MATTER
*C08G59/20*(2006.01)i, *C08J5/24*(2006.01)i

According to International Patent Classification (IPC) or to both national classification and IPC

B. FIELDS SEARCHED

Minimum documentation searched (classification system followed by classification symbols)
C08G59/20-59/38, C08J5/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-2948 A (Toray Industries, Inc.), 08 January 2003 (08.01.2003), claims; paragraphs [0010] to [0016], [0018], [0045]; examples (Family: none) | 1-12 |
| Y | WO 2007/125759 A1 (Toray Industries, Inc.), 08 November 2007 (08.11.2007), claims; paragraphs [0020], [0026] to [0028], [0032], [0054], [0055], [0057] to [0065]; examples & EP 2011825 A1 & WO 2007/125759 A1 & CN 101405342 A & KR 10-2009-0006114 A | 1-12 |

☒ Further documents are listed in the continuation of Box C.    ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 15 December, 2014 (15.12.14) | 22 December, 2014 (22.12.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2014/074783

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2012-77124 A (Toray Industries, Inc.), 19 April 2012 (19.04.2012), claims; paragraphs [0030], [0031], [0033] to [0053]; examples (Family: none) | 1-12 |
| A | JP 2000-119375 A (Nippon Mitsubishi Oil Corp.), 25 April 2000 (25.04.2000), claims; examples (Family: none) | 1-12 |
| A | WO 2013/115152 A1 (Toray Industries, Inc.), 08 August 2013 (08.08.2013), claims; examples & JP 5403184 B & CN 104080856 A | 1-12 |
| A | JP 2000-7956 A (Toray Industries, Inc.), 11 January 2000 (11.01.2000), claims; examples (Family: none) | 1-12 |
| A | JP 11-302507 A (Toray Industries, Inc.), 02 November 1999 (02.11.1999), claims; examples (Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010163573 A
- WO 2007125759 A
- JP 2002069155 A